# EUROPEAN PATENT SPECIFICATION

(11) **EP 1 936 903 B1**
(45) Date of publication and mention of the grant of the patent: **18.11.2009**
(21) Application number: 08005106.3
(22) Date of filing: 23.04.2003
(51) Int. Cl.: H04W 88/06, H04W 88/12

(54) **Radiotelephony network with multi-carrier packet data transmission**
Funktelefon-Netzwerk mit Paketdaten-Mehrträgerübertragung
Réseau de téléphonie radio avec transmission multiporteuse de données en paquet

(43) Date of publication of application: 25.06.2008
(62) Divisional of application: 03715198.2
(73) Proprietor: Telecom Italia S.p.A., 20123 Milano (IT)
(72) Inventor: Calcagno, Andrea, 87072 Francavilla Marittima (CS) (IT); Buracchini, Enrico, 10148 Torino (IT)
(74) Representative: Battipede, Francesco

(56) References cited:
- EP-A- 0 984 654
- EP-A- 1 175 116
- WO-A-01/99466
- WO-A-99/53644
- WO-A-02/073831
- US-B1- 6 546 251
- ETSI SMG#24, SMG2: "Summary of the concept description of the Beta conecept" UMTS 30.06 VERSION 3.0.0, TR 101 146 V.3.0.0, 15 December 1997 (1997-12-15), - 19 December 1997 (1997-12-19) XP002250655 Madrid, Spain
- VOGIATZIS N ET AL: "An adaptive multicarrier wireless access system" IEEE, vol. 1, 23 September 2000 (2000-09-23), pages 298-303, XP010532513
- NORTEL NETWORKS, WAWECOMM, FRANCE TELECOM: "Stand Alone DSCH principles and benefits" TSGR1#19(01)0290 TSG-RAN WORKING GROUP 1 MEETING #19, 27 February 2001 (2001-02-27), - 3 March 2001 (2001-03-03) pages 1-3, XP002250656 Las Vegas, USA
- HARRI HOLMA, ANTTI TOSKALA: "WCDMA FOR UMTS" 2000, JOHN WILEY & SONS LTD , CHICHESTER, WEST SUSSEX PO19 1UD ENGLAND , XP002250657 * page 66 - page 67 * * page 121 - page 127 * * page 67, lines 27-37, paragraph 5.5.1.2 * * page 121, line 1, paragraph 7.1 - page 122, line 17, paragraph 7.2 * * page 124, lines 16-28, paragraph 7.3.2 * * page 126, line 6, paragraph 7.3.4 *

## Description

The present invention relates generally to the field of radio telephony and particularly to a radio telephony network, for example a third generation radio telephony network. More particularly, the present invention relates to a third generation radio telephony network with packet data transmission provided by a multi-carrier tecnique such as OFDM ("Orthogonal Frequency Division Multiplexing").

Known radio telephony systems such as GSM are essentially intended for voice communication. They use two symmetrical links, namely a downlink (from a terrestrial base station to a mobile station) and an uplink (from a mobile station to a base station).

The systems under development are also based on a structure of this type. Thus, the UMTS standard issued by ETSI provides for two symmetrical links, one for uplink and one for downlink.

One of the problems to be faced by radio telephony in the forthcoming years is the presence of new services and new applications requiring very high speed data transmission.

Recent studies have shown that the resources allocated to the transmission of data (files, sounds, fixed or animated images), particularly via Internet or other similar networks, will form the predominant part of the resources available from the year 2005 onwards, while the resources allocated to voice communication are expected to remain practically constant.

WO 99/53644 describes the transmission of a cellular radio telephone signal via a symmetrical two-way main channel, including a main uplink and a main downlink, in particular for data transmission at medium or low speed and for the transmission of signaling information and control data, and comprising at least one additional. channel assigned solely to the downlink for high-speed data transmission.

The main channel uses a code division access method (CDMA), while the supplementary channel uses a multi-carrier technique.

The multi-carrier technique is implemented by the simultaneous transmission of carrier frequencies (using the OFDM technique for example).

In particular, said supplementary channel uses the "IOTA" modulation technique.

Additionally, the document R1-02-1222, Reference OFDM Physical Layer Configuration, Nortel Network, 3GPP TSG RAN1 Meeting#28bis, Espoo, Finland, October 8-9, 2002 (associated slides R1-02-12) describes an example reference OFDM configuration which may be considered to evaluate the performance of OFDM in the framework of the SI ("Study Item") on OFDM introduction in UTRAN. This OFDM configuration assumes the use of a separate downlink carrier bearing an OFDM HS-DSCH (High Speed-Downlink Shared Channel) transmission or an OFDM DSCH (Downlink Shared Channel) transmission.

EP 1175116 A discloses RNC interfaced to cells overlays with bigger cells supporting real time traffic whereas non real time traffic is moved to smaller cells using packet switched GPRS or EDGE.

US 6546251 A discloses GSM wide area cells overlapped with smaller GPRS packet channel cells.

ETSI SMG#24, TR 101 146 discloses an OFDMA based UTRA proposal with micro, pico and macro cells.

WO 02073831 A discloses OFDM downlink channel in WCDMA UMTS, assigned also in dedicated way,

Holma- Toskala "WCDMA for UMTS" explains the use of frame protocol in the context of MAC functionalities in WCDMA UMTS.

The Applicant faced the problem of making a radio telephony network capable of providing a high-speed packet data transmission service in areas where high traffic is expected.

The Applicant has observed that the problem described above can be solved by a radio telephony network comprising at least one base radio station supporting a radio access of a multi-carrier type.

According to the present invention, it is therefore provided a radio telephony network for a packet data transmission service comprising a plurality of network controllers, each network controller being connected via an interface to at least one base radio station, supervising at least one macrocell and supporting at least a first radio access, said at least one base radio station providing said packet data transmission service on at least one radio link by using a second radio access of a multi-carrier type. Each network controller being **characterized in that** it comprises an access control sub-level including a frame protocol for controlling the transport of multi-carrier radio signals within said network controller or between said network controller and said at least one base radio station.

The radio telephony network can also comprise at least one base radio microstation supervising one or more microcells incorporated in at least one macrocell served by the at least one base radio station. The microcells are centered at points different from the center of the macrocell, where the "center of the macrocell" denotes the point at which the base radio station is located. The microcells correspond to areas where high traffic is expected (known as "hot spots"), such as airports, stadium, small urban centers, hotels, commercial centers etc. (outdoor environments) or buildings etc. (indoor office environments) in which the base radio microstations provide the packet data transmission service.

The base radio station and the base radio microstation can provide said packet data transmission service to at least one user equipment UE provided with a protocol structure having a physical level comprising circuit components for demodulating the multi-carrier radio signal.

The characteristics and advantages of the present invention will be made clear by the following description of an example of embodiment provided for guidance and without restrictive intent, with reference to the attached drawings, in which:
- Figure 1 is a schematic representation of a radio telephony network;
- Figure 2 shows a distribution of base radio microstations of the radio telephony network of Figure 1; and
- Figure 3 is a schematic representation of a protocol structure of a portion of the radio telephony network of Figure 1.

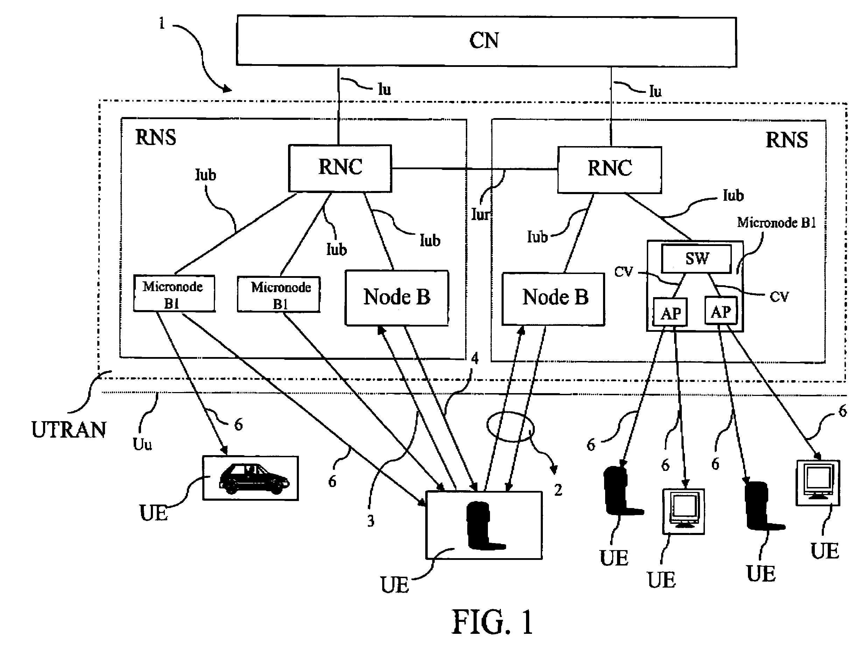

Figure 1 shows a third-generation radio telephony network 1 The radio telephony network 1 has a main radio access of the CDMA type on a main radio channel 2 comprising two symmetrical links, namely a main uplink 3 (uplink) and a main downlink 4 (downlink), both, for example, with a 5 MHz bandwidth. The radio telephony network 1 also supports a multi-carrier radio access on at least one link of a supplementary radio channel 6 to provide a packet data transmission service.

The supplementary radio channel 6, for example with a 5 MHz bandwidth, can be located within the radio frequency band assigned to third-generation systems. These radio frequencies form a "core" band of 230 MHz in the 1885÷2025 MHz and 2210÷2200 MHz portions of the spectrum. Alternatively, the supplementary radio channel 6 could be located in an extension of the aforesaid band. In this case, the 800÷960 MHz, 1700÷1885 MHz and 2500÷2690 MHz portions of the spectrum, for example, have been identified.

The radio telephony network 1 comprises the following logical entities:
- Core Network CN;
- radio access network UTRAN (UMTS Terrestrial Radio Access Network);
- user equipment UE.

More specifically, the Core Network CN, made according to the 3GPP specifications, is a switching and routing infrastructure interconnecting the various sections of the radio access network UTRAN which, in turn, directly collects the traffic from a plurality of base radio stations, referred to below as B-nodes, connected to the user equipment UE (for example cell phones, vehicles, electronic computers, etc.) via the main radio channel 2.

As shown in Figure 1, the radio access network UTRAN is delimited by two interfaces, namely a radio interface called Uᵤ delimiting the radio access network UTRAN towards the user equipment UE and a network interface Iᵤ connecting the radio access network UTRAN to the Core Network CN.

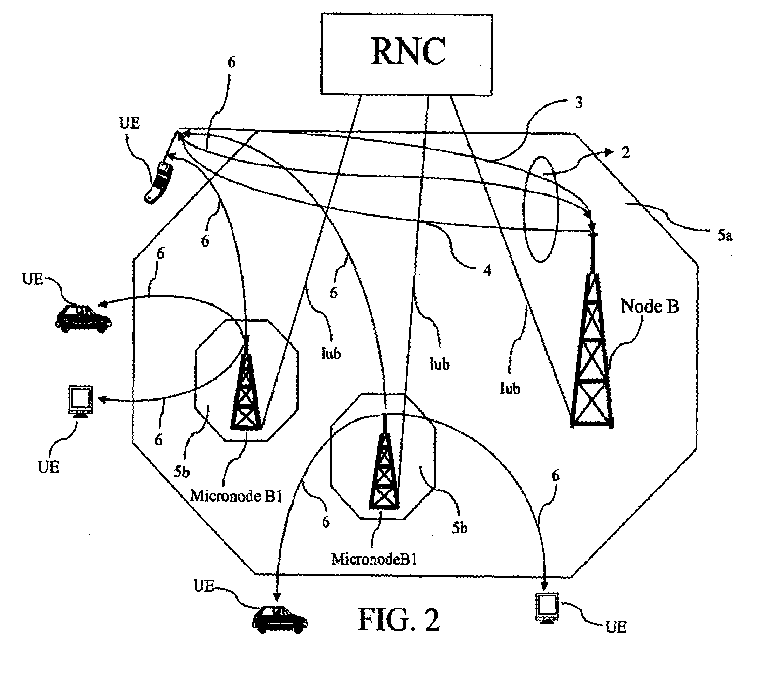

In detail, the radio access network UTRAN comprises a plurality of radio sub-systems RNS (Radio Network System) connected to the Core Network CN via the network interface Iᵤ. Each radio sub-system RNS includes a network controller RNC (Radio Network Controller) representing the boundary between the radio portion and the remaining network, and one or more B-nodes, connected to the network controller RNC via an interface I_{ub}. Each B-node, made according to the 3GPP specifications, supervises one or more macrocells 5a, as shown in Figure 2. Additionally, the network controllers RNC can be interconnected by means of an interface Iᵤᵣ.

With reference to Figures 1 and 2, the radio telephony network 1 also comprises one or more base radio microstations, referred to below as B1-micronodes, connected to the network controllers RNC via an interface I_{ub} of the same type as that connecting the B-nodes to the corresponding network controllers RNC. Each B1-micronode supervises one or more microcells 5b comprised in at least one macrocell 5a served by the B-node. The microcells 5b are centred at points different from the center of the macrocell 5a, where the "center of the macrocell 5a" denotes the point at which the base radio station (B-node) is located. In particular, the microcells 5b correspond to areas where high traffic is expected (known as "hot spots"), such as airports, stadium, small urban centers, hotels, commercial centers etc. (outdoor environments) or buildings etc. (indoor office environments) in which the B1-micronodes provide the packet data transmission service. The B1-micronodes support at least one link of the supplementary radio channel 6 for the packet data transmission service, using a multi-carrier radio access, preferably of the OFDM type.

Preferably, in indoor office environments characterized by confined spaces, each B1-micronode can be made by a central switch SW, connected to the corresponding network controller RNC, and a plurality of access ports AP connected to the central switch SW by a cable Cᵥ which also supplies the power.

Functionally, each network controller RNC controls the radio resources and controls the radio transport, while each B-node/B1-micronode has the task of implementing the radio transmission (modulation, reception and transmission, power control) for carrying the information to the user equipment UE which is located in the macrocells 5a/microcells 5b.

In practice, each B-node/B1-micronode receives from the network controller RNC connected to it the resources to send to the user equipments UE and transmits them over the air, adjusting their power levels according to information received from said network controller RNC. At the same time, the B-node/B1-micronode carries out power and quality measurements on user equipment UE received signals for enabling the network controller RNC to adjust its parameters in the management of the radio resources.

In particular, the B1-micronodes also have specific functions relating to the protocol levels MAC and RLC which are described in detail in the remainder of the present description.

The system described above enables the user equipment UE to receive services supplied by the radio telephony network 1 even if they are supplied by B-nodes/B1-micronodes belonging to network controllers RNC other than the original network controller of the call. This enables the mobility of the user equipment UE to be managed efficiently by the network controllers RNC.

In particular, the packet data transmission provided by the B1-micronodes in the microcells 5b can reach a speed of 3+24 Mb/s, for example, depending on the type of modulation and signal coding used. Thus the user equipments UE located within the microcells 5b can access, for example, Internet or other similar networks by directly using the radio telephony network 1, the B1-micronodes being connected directly to the network controllers RNC.

To allow access to this functionality, the user equipment UE supports both CDMA radio access and multi-carrier radio access. This is because the request of the packet data transmission service and both the allocation of the radio resources and the dialog with the uplink 3 in the call establishment phase and during the course of the service, take place by means of the CDMA radio access.

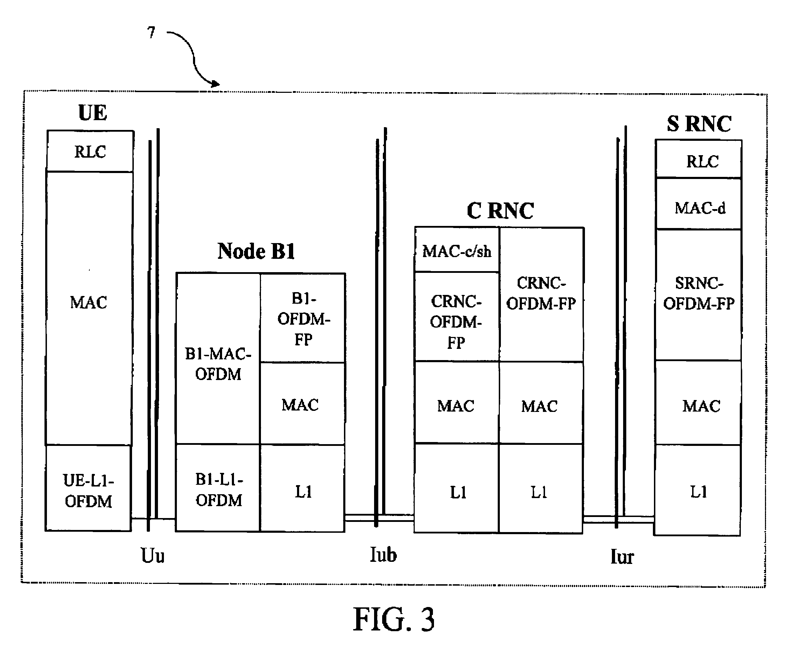

Figure 3 shows schematically the protocol structure of a portion 7 of the radio telephony network 1 supporting, on a downlink of the supplementary channel 6, the packet data transmission providing by means of a multi-carrier tecnique, preferably of the OFDM type. Specifically, in the multi-carrier tecnique the data are transmitted by means of radio signals comprising a plurality of carrier frequencies transmitted simultaneously.

The radio telephony network 1 also has a conventional protocol structure for reception and transmission according to the main CDMA radio access.

The network portion 7 comprises the user equipment UE protocols, the radio interface Uᵤ, the B1-micronode protocols, the interface I_{ub}, the network controller RNC protocols and the interface Iᵤᵣ.

Figure 3 also shows two different operating modes of the network controller RNC, called Controlling RNC (C RNC) and Serving RNC (S RNC) respectively, as specified in 3GPP.

In particular, in the "controlling" mode the network controller RNC controls the traffic and the congestion situations of its own cells and terminates the interface I_{ub}, while in the "serving" mode the network controller RNC controls and manages the resources of the user equipment UE and terminates the interface Iᵤ.

As shown in Figure 3, the protocol structure of the network portion 7 includes the first two levels of the OSI (Open System Interconnection) protocol stack, namely:
- the physical level L1;
- the data transmission level L2 (Data Link).
Additionally, the data transmission level L2 is divided into two sub-levels, namely an access control sub-level MAC (Medium Access Control) and a transmission control sub-level RLC (Radio Link Control).

In particular, the physical level L1 offers services to the access control sub-level MAC in the form of transport channels.

The access control sub-level MAC controls the simultaneous accesses of a plurality of user equipments UE (multiple access) to the available radio resources, and offers services to the transmission control sub-level RLC via logical channels characterized by the type of data transmitted.

The transmission control sub-level RLC controls the transmission of the information within the access network UTRAN, also offering a retransmission service for those packets which the physical level L1 has been unable to deliver successfully to their destinations.

With further reference to Figure 3, the user equipment UE comprises, from the bottom to the top, the physical level UE-L1-OFDM comprising circuit components for demodulating a multi-carrier radio signal, preferably of the OFDM type; the access control sub-level MAC; and the transmission control sub-level RLC.

The B1-micronode comprises, from the bottom to the top, the physical level L1 and the access control sub-level MAC.

In greater detail, the physical level L1 of the B1-micronode next to the radio interface Uᵤ comprises a portion B1-L1-OFDM made from circuit components, such as dedicated circuits and/or programmable DSPs, which can process the multi-carrier radio signal, preferably of the OFDM type (channel coding, interleaving, transmission speed adaptation, modulation). The access control sub-level MAC includes the logical entity Bl-MAC-OFDM, located above the portion B1-L1-OFDM and below a logical entity MAC-c/sh present in the network controller RNC operating in "controlling" mode. The logical entity MAC-c/sh of the network controller RNC controls the common and shared channels, while the logical entity B1-MAC-OFDM of the B1-micronode controls the multi-carrier radio access, preferably of the OFDM type. In particular, the logical entity B1-MAC-OFDM maps the logical channels on the transport channels and also implements functions of a HARQ (Hybrid Automatic Repeat Request) protocol and functions of scheduling (a procedure which attempts to transmit only to the user equipment UE having favorable radio conditions). Specifically, the HARQ protocol controls the rapid request for retransmission of data packets which have not been correctly received, and also makes use of the information supplied by the incorrect data packets in order to achieve a correct decoding of said packets.

Additionally, the implementation of the scheduling functions within the B1-micronode provides greater efficiency in the execution of this procedure. This is because the scheduler can adapt the type of modulation to the conditions of the radio channel, transmitting only to the user equipment UE for which the radio conditions are good, and allocating the radio resources of the radio telephony network 1 with appropriate algorithms.

Advantageously, the introduction of the logical entity B1-MAC-OFDM enables the mobile operator to provide packet data transmission, preferably using the OFDM tecnique, without modifying the higher levels and protocols of the radio telephony network 1 (the transmission control sub-level RLC and the protocol PCDP-Packet Data Convergence, the latter being present in the network level, or level L3, of the radio telephony network 1).

Furthermore, the logical entity B1-MAC-OFDM enables the transmission control sub-level RLC to operate either in AM mode (OFDM transmission found) or in UM mode (OFDM transmission not found), and enables the protocol PDCP to be configured for header compression, if required.

Next to the interface I_{ub}, the access control sub-level MAC comprises a frame protocol B1-OFDM-FP controlling the transport of data between the B1-micronode and the network controller RNC connected to it.

If the B1-micronode is made by the central switch SW and the access ports AP, the central switch SW comprises the access control sub-level MAC, including the logical entity B1-MAC-OFDM located next to the radio interface Uᵤ, and the frame protocol B1-OFDM-FP located next to the interface I_{ub}. Each of the access ports AP comprises the physical level L1 including the portion B1-L1-OFDM comprising the logic required for controlling the radio communication. In this way, practically all the computing capacity is moved into the central switch SW, thus minimizing the space occupied by the access ports AP.

With further reference to Figure 3, the network controller RNC comprises, from the bottom to the top, the physical level L1 and the data transmission level L2.

In particular, in "controlling" mode the network controller RNC comprises, from the bottom to the top, the physical level L1 and the access control sub-level MAC. The access control sub-level MAC comprises the frame protocol CRNC-OFDM-FP which, on the side facing the interface I_{ub} is located below the logical entity MAC-c/sh by the frame protocol B1-OFDM-FP of the B1-micronode, and which, on the side facing the interface Iᵤᵣ, is located below a logical entity MAC-d present in the network controller RNC operating in "serving" mode. The logical entity MAC-d has the task of controlling the dedicated channels.

In "serving" mode, the network controller RNC comprises, from the bottom to the top, the physical level L1, the access control sub-level MAC and the transmission control sub-level RLC. The access control sub-level MAC comprises the frame protocol SRNC-OFDM-FP locating below the logical entity MAC-d by the frame protocol CRNC-OFDM-FP of the network controller RNC operating in "controlling" mode.

The frame protocol SRNC-OFDM-FP permits data transport within the network controller RNC (if the interface Iᵤᵣ is present) and direct dialog between the B1-micronode and the network controller RNC operating in "serving" mode (if the interface Iᵤᵣ is not present) .

Functionally, a data packet entering the network controller RNC operating in "serving" mode is received by the transmission control sub-level RLC and, subsequently, by the logical entity MAC-d, and then enters the frame protocol SRNC-OFDM-FP and finally reaches B1-micronode via the frame protocol CRNC-OFDM-FP of the network controller RNC operating in "controlling" mode.

In the B1-micronode, the data packet passes through the frame protocol B1-OFDM-FP and is received by the logical entity B1-MAC-OFDM and subsequently by the physical level B1-L1-OF'DM.

The data packet then passes through the radio interface Uᵤ and is received by the physical level UE-L1-OFDM of the user equipment UE and subsequently by the access control sub-level MAC and by the transmission control sub-level RLC, and then becomes visible to the user.

Advantageously, in the radio telephony network 1 the updating of the B-nodes can also be provided, so that these nodes can support multi-carrier radio access, preferably of the OFDM type, on at least one link of the supplementary radio channel 6 to provide the packet data transmission service.

In general, each B-node has a protocol structure comprising the physical level L1 and the access control sub-level MAC.

In the updated B-node, in order to provide the packet data transmission service in a downlink of the supplementary channel 6, the physical level L1 comprises a portion B-L1-OFDM including circuit components, such as dedicated circuits and/or programmable DSPs capable of processing a multi-carrier radio signal, preferably of the OFDM type, while the access control sub-level MAC comprises the logical entity B-MAC-OFDM which is identical to the logical entity B1-MAC-OFDM described previously.

The advantages of the radio telephony network 1 according to the invention are evident from the above description. In particular, it is pointed out that this network can provide new business opportunities for the mobile operator in so-called "hot spots", since it is competitive with WLAN networks both in terms of the bit rate obtainable and in terms of ease of deployment; in the latter case, the B1-micronodes B1 are preferably made by the central switch SW and the access ports AP.

Additionally, if the radio telephony network 1 comprises both the updated B-nodes and the B1-micronodes it can offer the user the mobility functionalities provided by the radio sub-systems RNS; conversely, WLAN networks cannot offer this basic functionality.

The applicant has also observed that the above description relating to the downlink of the supplementary radio channel 6 can also be extended to an uplink of said radio channel. This is because the B1-micronode B1 made according to the present invention can be modified according to the teachings of the present invention to make it suitable for receiving and controlling any data packets transmitted by user equipment UE. Also in this case, the radio access can be of the multi-carrier type, preferably of the OFDM type.

## Claims

1. A radio telephony network (1) for a packet data transmission service comprising a plurality of network controllers (RNC), each network controller (RNC) being connected via an interface (I_{ub}) to at least one base radio station (B-node) supervising at least one macrocell (5a) and supporting at least a first radio access, said at least one base radio station providing said packet data transmission service on a radio link (6) by using a second radio access of a multi-carrier type, **characterized in that** each network controller (RNC) comprises an access control sub-level (MAC) including a frame protocol (RNC-OFDM-FP) for controlling the transport of multi-carrier radio signals within said network controller (RNC) or between said network controller (RNC) and said at least one base radio station (B-node).

2. The network as claimed in claim 1, **characterized in that** said multi carrier radio access is of the OFDM type.

3. The network as claimed in claim 2, **characterized in that** said at least one base radio station (B-node) comprises a physical level (L1) and an access control sub-level (MAC), said physical level (L1) including a portion (B-L1-OFDM) comprising dedicated circuits and/or programmable DSPs capable of processing a multi-carrier radio signal and said access control sub-level (MAC) comprising a logical entity (B-MAC-OFDM) for controlling said multi-carrier radio access.

4. The network as claimed in claim 3, **characterized in that** said logical entity (B-MAC-OFDM) maps logical channels on transport channels.

5. The network as claimed in claim 3, **characterized in that** said logical entity (B-MAC-OFDM) implements functions of retransmission of incorrectly received data packets.

6. The network as claimed in claim 3, **characterized in that** said logical entity (B-MAC-OFDM) implements scheduling functions.

7. The network as claimed in claim 1, **characterized in that** said at least one radio link (6) is a downlink.

## Patentansprüche

1. Funktelefon-Netzwerk (1) für einen Paketdatenübertragungsdienst mit mehreren Netzwerk-Steuereinrichtungen (radio network controllers, RNC), wobei jede Netzwerk-Steuereinrichtung (RNC) über eine Schnittstelle (I_{ub}) mit wenigstens einer Basisfunkstation (B-Knoten) verbunden ist, welche wenigstens eine Makrozelle (5a) überwacht und wenigstens einen ersten Funkzugang unterstützt, wobei die wenigstens eine Basisfunkstation den Paketdatenübertragungsdienst über eine Funkverbindung (6) unter Verwendung eines zweiten Funkzugangs eines Mehrträgertyps bereitstellt, **dadurch gekennzeichnet, dass** jede Netzwerksteuereinrichtung (RNC) eine Zugangssteuerungsunterschicht (medium access control, MAC) mit einem Frame-Protokoll (RNC-OFDM-FP) zum Steuern der Übertragung von Mehrträgerfunksignalen innerhalb der Netzwerk-Steuereinrichtung (RNC) oder zwischen der Netzwerk-Steuereinrichtung (RNC) und der wenigstens einen Basisfunkstation (B-Knoten) umfasst.

2. Netzwerk nach Anspruch 1, bei dem der Mehrträgerfunkzugang vom OFDM-Typ ist.

3. Netzwerk nach Anspruch 2, bei dem die wenigstens eine Basisfunkstation (B-Knoten) eine Bitübertragungsschicht (L1) und eine Zugangssteuerunterschicht (MAC) umfasst, wobei die Bitübertragungsschicht (L1) einen Teil (B-L1-OFDM) umfasst, welcher speziell vorgesehene Schaltkreise und/oder programmierbare digitale Signalprozessoren (DSP), welche zum Verarbeiten eines Mehrträgerfunksignals fähig sind, aufweist, und die Zugangssteuerungsunterschicht (MAC) eine logische Einheit (B-MAC-OFDM) zum Steuern des Mehrträgerfunkzugangs umfasst.

4. Netzwerk nach Anspruch 3, bei dem die logische Einheit (B-MAC-OFDM) logische Kanäle auf Übertragungskanäle abbildet.

5. Netzwerk nach Anspruch 3, bei dem die logische Einheit (B-MAC-OFDM) Neuübertragungsfunktionen inkorrekt empfangener Datenpakete implementiert.

6. Netzwerk nach Anspruch 3, bei dem die logische Einheit (B-MAC-OFDM) Ablaufplanungsfunktionen implementiert.

7. Netzwerk nach Anspruch 1, bei dem die wenigstens eine Funkverbindung (6) eine Abwärtsverbindung ist.

## Revendications

1. Réseau radiotéléphonique (1) pour un service de transmission de données par paquets comprenant une pluralité de contrôleurs de réseau (RNC), chaque contrôleur de réseau (RNC) étant connecté par l'intermédiaire d'une interface (I_{ub}) à au moins une station radio de base (B-node) surveillant au moins une macro-cellule (5a) et supportant au moins un premier accès radio, ladite au moins une station radio de base fournissant ledit service de transmission de données par paquets sur une liaison radio (6) en utilisant un second accès radio à porteuses multiples, **caractérisé en ce que** chaque contrôleur de réseau (RNC) comprend un sous-niveau de contrôle d'accès (MAC) comprenant un protocole de trame (RNC-OFDM-FP) pour contrôler le transport de signaux radio à porteuses multiples à l'intérieur dudit contrôleur de réseau (RNC) ou entre ledit contrôleur de réseau (RNC) et ladite au moins une station radio de base (B-node).

2. Réseau selon la revendication 1, **caractérisé en ce que** ledit accès radio à porteuses multiples est du type OFDM.

3. Réseau selon la revendication 2, **caractérisé en ce que** ladite au moins une station radio de base (B-node) comprend un niveau physique (L1) et un sous-niveau de contrôle d'accès (MAC), ledit niveau physique (L1) comprenant une partie (B-L1-OFDM) comprenant des circuits dédiés et/ou DSPs programmables capables de traiter un signal radio à porteuses multiples et ledit sous-niveau de contrôle d'accès (MAC) comprenant une entité logique (B-MAC-OFDM) pour contrôler ledit accès radio à porteuses multiples.

4. Réseau selon la revendication 3, **caractérisé en ce que** ladite entité logique (B-MAC-OFDM) reporte des canaux logiques sur des canaux de transport.

5. Réseau selon la revendication 3, **caractérisé en ce que** ladite entité logique (B-MAC-OFDM) implémente des fonctions de retransmission de paquets de données incorrectement reçus.

6. Réseau selon la revendication 3, **caractérisé en ce que** ladite entité logique (13-MAC-OFTOM) implémente des fonctions de planification.

7. Réseau selon la revendication 1, **caractérisé en ce que** ladite au moins une liaison radio (6) est une liaison descendante.
